# EUROPEAN PATENT APPLICATION

(11) **EP 4 601 051 A1**
(43) Date of publication of application: **13.08.2025**
(21) Application number: 25150598.8
(22) Date of filing: 08.01.2025
(51) Int. Cl.: H01M 4/66, H01M 10/0585, H01M 50/105, H01M 50/178, H01M 50/514, H01M 50/516, H01M 50/533, H01M 50/536, H01M 50/54, H01M 50/55, H01M 50/557

(54) **ELECTRODE PLATE, ELECTRODE ASSEMBLY, AND RECHARGEABLE BATTERY INCLUDING THE SAME**

(30) Priority: 10.01.2024 KR 20240004430
(71) Applicant: SAMSUNG SDI CO., LTD., Yongin-si, Gyeonggi-do 17084 (KR)
(72) Inventor: CHOI, Jinkyu, 17084 Gyeonggi-do (KR)
(74) Representative: Michalski Hüttermann & Partner Patentanwälte mbB

(57) **Abstract**

An electrode plate includes: a base layer; a current collecting layer including: a first conductive layer; and a second conductive layer respectively on upper and lower surfaces of the base layer; and an electrode plate layer on at least one surface of the current collecting layer, wherein the current collecting layer includes: a current collecting portion where the electrode plate layer is on at least one surface; an extending portion extending outward from the current collecting portion; and a curved portion connected to the extending portion and having a portion that is bent.

## Description

### BACKGROUND

### 1. Field

Aspects of some embodiments of the present disclosure relate to an electrode plate, an electrode assembly, and a rechargeable battery including the same.

### 2. Description of the Related Art

Rechargeable batteries may be manufactured in various shapes, and among them, a pouch battery may include an electrode assembly with an insulator that is a separator located between a positive electrode plate and a negative electrode plate, and a thin flexible pouch in which the electrode assembly is embedded. In this case, the pouch may accommodate the electrode assembly in the inner space.

Electrode assemblies of the rechargeable battery may be divided into a winding type and a stacking type depending on the structure thereof. The stacking type may have relatively good structural safety and relatively excellent spatial utility, so it ma be widely applied to small and medium-sized products. The stacking type rechargeable battery may include a stack of multiple electrode plates and the separator.

The current collector applied to the electrodes of the rechargeable battery-that is, the positive electrode and the negative electrode-may be a thin film of electrical conductivity such as copper, aluminum, Ni, or SUS. For example, in the case of commercially available lithium ion batteries, a copper foil current collector without a through hole is used for the negative electrode, and an aluminum foil current collector without a through hole is used for the positive electrode.

In order to lower the manufacturing cost of rechargeable batteries and reduce their weight, instead of manufacturing the entire current collector with copper or aluminum, a current collector with a metal layer applied to both sides of the resin may be utilized.

In a stack electrode plate using a resin metal composite substrate, when the plurality of electrode substrate tabs are welded using some methods, there may be a problem in that the entire electrode plate cannot be utilized or may not be electrically active.

The resin metal composite substrate may have a metal layer positioned on both sides of the resin sheet, and the resin may have low conductivity, which may make it difficult to electrically connect both sides together. For example, in the stack electrode plate using the plurality of electrode plates, the uncoated regions may be joined to each other to be welded with the electrode terminal, but there may be a problem in that the metal layers on both sides do not conduct electricity to each other, and only one side touches each other, making welding difficult.

The above information disclosed in this Background section is only for enhancement of understanding of the background and therefore the information discussed in this Background section does not necessarily constitute prior art.

### SUMMARY

Aspects of some embodiments of the present disclosure may include an electrode plate, an electrode assembly, and a rechargeable battery including the same that may implement an electricity transfer between the adjacent electrode plates.

The characteristics of embodiments according to the present invention are not limited to those mentioned above, and other non-mentioned characteristics would be clearly understood by those skilled in the art from the following description.

According to some embodiments of the present disclosure, an electrode plate includes a base layer, a current collecting layer including a first conductive layer and a second conductive layer respectively located on upper and lower surfaces of the base layer, and an electrode plate layer positioned on at least one surface of the current collecting layer, wherein the current collecting layer includes a current collecting portion where the electrode plate layer is positioned on at least one surface, an extending portion extending outward from the current collecting portion, and a curved portion connected to the extending portion and having a portion of which is bent.

According to some embodiments, the base layer may include polyethylene terephthalate (PET).

According to some embodiments, the base layer may include at least one of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polychloride vinyl, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, polynitride sulfur, polyphenylene, polypyrrole, poly aniline, polythiophene, polypyridine, cellulose, starch, protein, epoxy resin, phenol resin, derivatives of the above-mentioned materials, crosslinked products of the above-mentioned materials, and copolymers of the above-mentioned materials.

According to some embodiments, the base layer may further include an additive, and the additive may include at least one of a metal material or an inorganic non-metal material.

According to some embodiments, the first conductive layer and the second conductive layer may include aluminum.

According to some embodiments, the first conductive layer and the second conductive layer may include at least one of a metal material, a carbon-based conductive material, or a conductive polymer material.

According to some embodiments, the length of the extending portion may be relatively longer than the length of the curved portion.

According to some embodiments of the present disclosure, an electrode assembly includes a plurality of electrode plates and a separator, wherein the plurality of electrode plates are stacked with the separator in between, each of the plurality of electrode plates includes a base layer, and a current collecting layer including a first conductive layer and a second conductive layer positioned on the upper and lower surfaces of the base layer, respectively, and an electrode plate layer on a portion of the current collecting layer, and the current collecting layer includes a current collecting portion where the electrode plate layer is positioned on at least one surface, an extending portion extending outward from the current collecting portion, and a curved portion that is connected to the extending portion and a portion of which is bent.

According to some embodiments, the current collecting layer included in each of the plurality of electrode plates may be combined with the adjacent curved portions in the upward and downward directions.

According to some embodiments, the current collecting layer included in each of the plurality of electrode plates may be combined with the adjacent extending portions in the upward and downward directions.

According to some embodiments, in the plurality of electrode plates, the extending portion of the current collecting layer included in the outermost electrode plate may have a first welding portion, and in the plurality of electrode plates, the curved portion of the current collecting layer included in the outermost electrode plate may have a second welding portion.

According to some embodiments, the plurality of electrode plates may include a first electrode plate and a second electrode plate.

According to some embodiments, the base layer may include polyethylene terephthalate (PET).

According to some embodiments, the base layer may include at least one of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polychloride vinyl, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, poly nitride sulfur, polyphenylene, polypyrrole, polyaniline, polythiophene, polypyridine, cellulose, starch, protein, epoxy resin, phenol resin, derivatives of the above-mentioned materials, crosslinked products of the above-mentioned materials, or copolymers of the above-mentioned materials.

According to some embodiments, the base layer may further include an additive, and the additive may include at least one of a metal material or an inorganic non-metal material.

According to some embodiments, the first conductive layer and the second conductive layer may include aluminum.

According to some embodiments, the first conductive layer and the second conductive layer may include at least one of a metal material, a carbon-based conductive material, or a conductive polymer material.

According to some embodiments, the curved portion may be in the shape of the letter "U."

According to some embodiments, the length of the extending portion may be relatively longer than the length of the curved portion.

A rechargeable battery according to some embodiments includes an electrode assembly and a case accommodating the electrode assembly.

According to some embodiments of the present disclosure, the electrode plate included in the electrode assembly includes the current collecting layer that includes the curved portion and the extending portion. In addition, the curved portions of each of the plurality of electrode plates are connected to each other, and the extending portions are also connected to each other. Accordingly, the first conductive layer of one current collecting layer is connected to the second conductive layer of the adjacent current collecting layer, and the entire electrode assembly may be electrically connected.

In this way, the electrode assembly according to some embodiments may not need to perform a conductive process that requires an additional folding of foils and an insertion thereof between electrode plates one by one. Therefore, not only the manufacturing time may be relatively shortened, but the manufacturing cost may also be relatively reduced.

### BRIEF DESCRIPTION OF THE DRAWINGS

The following drawings appended to this specification illustrate embodiments of the present invention and, together with the detailed description of the invention that follows, serve to further illustrate the technical ideas of the invention, and the invention is not to be construed as limited to what is illustrated in the accompanying drawings.
FIG. 1 is a perspective view showing a rechargeable battery in which an electrode plate according to some embodiments and an electrode assembly including the same may be installed.
FIG. 2 is a cross-sectional view showing a plurality of electrode plates combined with each other according to some embodiments.
FIG. 3 is a perspective view showing an electrode plate extracted from a rechargeable battery in FIG. 1 according to some embodiments.
FIG. 4 to FIG. 6 are cross-sectional views sequentially showing a process of combining electrode plates according to some embodiments.

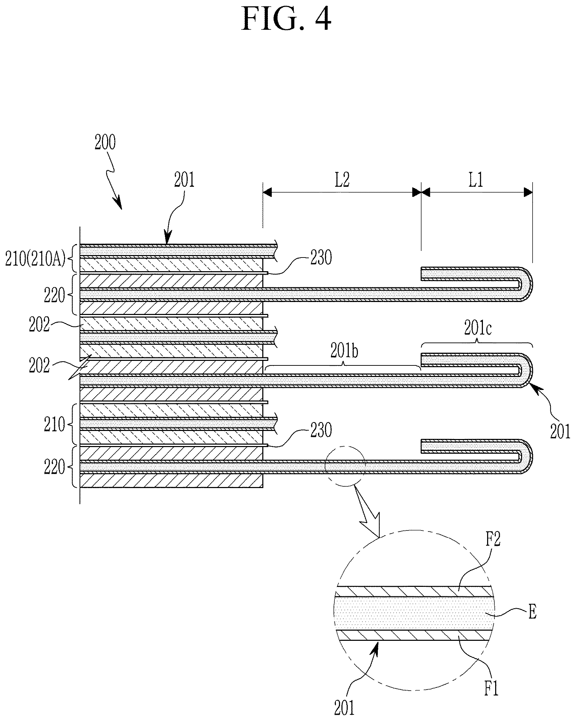

FIG. 4 is a cross-sectional view showing the electrode plates arranged side by side in upward and downward directions according to some embodiments.

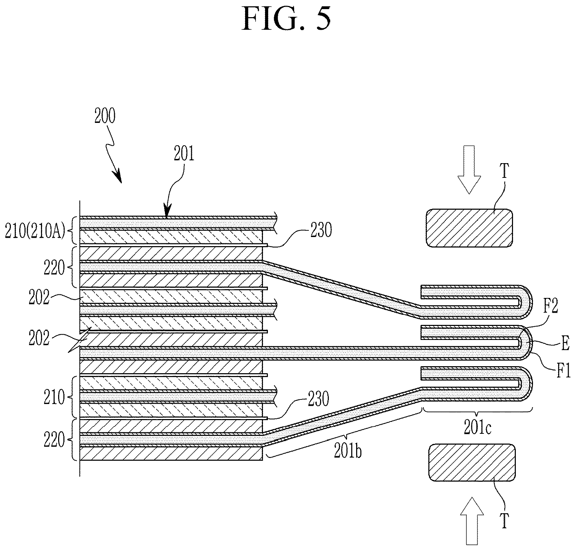

FIG. 5 is a cross-sectional view showing a process of welding a curved portion of each current collecting layer by ultrasonic welding according to some embodiments.

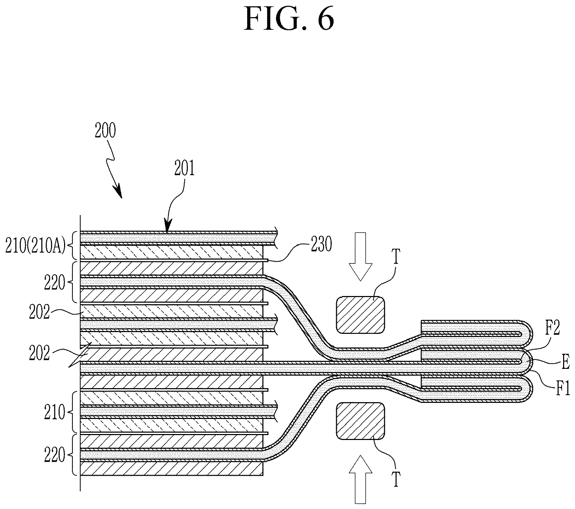

FIG. 6 is a cross-sectional view showing a process of welding an extending portion of each current collecting layer by ultrasonic welding according to some embodiments.

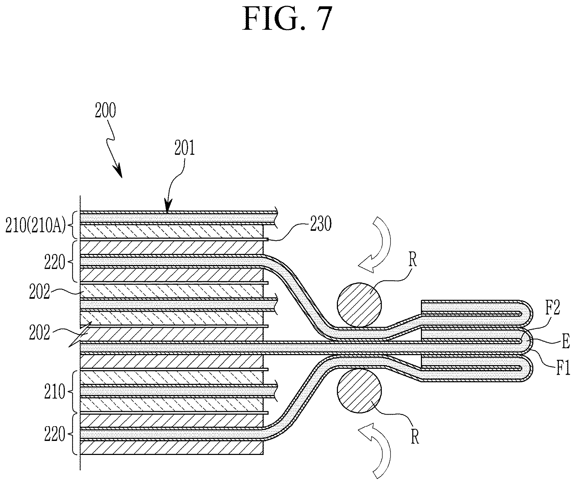

FIG. 7 is a cross-sectional view showing a process of pressing an extending portion with a roller according to some embodiments.

### DETAILED DESCRIPTION

Hereinafter, aspects of some embodiments of the present disclosure are described with reference to the drawings. Terms and words used in the present specification and claims are not to be construed as having a general or dictionary meaning, but are to be construed as having meanings and concepts meeting the technical ideas of the present disclosure based on a principle wherein the present inventors may appropriately define the present invention as the concepts of terms in order to optimally describe their disclosures. Therefore, the configurations described in the disclosed embodiments and drawings of the present invention are merely example embodiments but do not represent all of the technical ideas of the present invention, and thus the present invention should be construed as including all changes, equivalents, and substitutions included in the scope of the present invention at the time of filing this application.

It should be further understood that the terms "comprise, include" and/or "comprising, including," when used in this specification, specify the presence of stated features, integers, steps, operations, elements, and/or components, but do not preclude the presence or addition of one or more other features, integers, steps, operations, elements, components, and/or groups thereof.

In addition, the accompanying drawings may be exaggerated in dimensions of some of the components rather than drawn to scale to facilitate understanding of the present invention. Additionally, like reference numbers may be assigned to like components in other embodiments.

The statement that two objects of a comparison are "the same" means "substantially the same."

Therefore, "substantially identical" may include deviations that are considered low in the art-for example, deviations of no more than 5%. Additionally, a uniformity of a parameter in a given region may mean uniformity from an average perspective.

Although the terms "first," "second," and the like are used to describe various constituent elements, these constituent elements are not limited by these terms. These terms are only used to distinguish one component from another, and unless specifically stated to the contrary, a first component may also be a second component.

Throughout the specification, unless otherwise stated, each component may be singular or plural.

When any configuration is located "on top of" (or "under") a component or "above" (or "below") a component, it may mean that any configuration is located in contact with the top (or bottom) surface of the component, as well as that other configurations may be interposed between the component and any configuration located on (or below) the component.

Additionally, if a component is described as "on," "connected to," or "coupled to" another component, the components may be directly connected or connected to each other, but it should be understood that other components may be "interposed" between each component, or that each component may be "connected," "coupled," or "connected" through other components.

As used herein, the term "and/or" includes any one or all combinations of one or more related items. Additionally, the use of "may" when describing embodiments of the present disclosure refers to "one or more embodiments of the present disclosure."

An expression such as "at least one," preceding a list of elements modifies an entire list of elements and not an individual element in the list.

When reference is made to "A and/or B" throughout the specification, it means A, B or A and B, unless specifically stated to the contrary, and when reference is made to "C through D," it means C or higher and D or lower unless specifically stated to the contrary.

When a phrase such as "at least one selected from A, B, and C," "at least one selected from A, B, or C," "at least one selected from A, B, and C group" and "at least one selected from A, B, and C" is used to specify a list of elements A, B, and C, the phrase may refer to any and all suitable combinations.

The term "use" may be considered synonymous with the term "utilize."

As used herein, terms such as "substantially" and "about" are used as terms of approximation and not as terms of degree and are intended to explain the inherent variations of measured or calculated values that could be recognized by a person of ordinary skill in the art.

It should be understood that, although the terms "first," "second," "third," etc., may be used herein to describe various elements, components, regions, layers and/or sections, such elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

As shown in the drawings, spatially relative terms, such as "beneath," "below," "lower," "under," "above," "upper," and the like, may be used herein for ease of explanation to describe one element or feature's relationship to another element(s) or feature(s) as illustrated in the drawing. It should be understood that spatially relative positions are intended to encompass different orientations of the device in use or in operation, in addition to the orientations depicted in the drawings. For example, if the device in the drawings is turned over, elements described as "below," "beneath," or "under" other elements or features would then be oriented "above" the other elements or features. Thus, the term "down" can encompass both an orientation of above and below.

The terms used herein are intended to describe embodiments of the present disclosure and are not intended to limit it.

Hereinafter, before explaining an electrode plate according to some embodiments of the present invention with reference to the drawings, a rechargeable battery including the electrode plate will be described in detail.

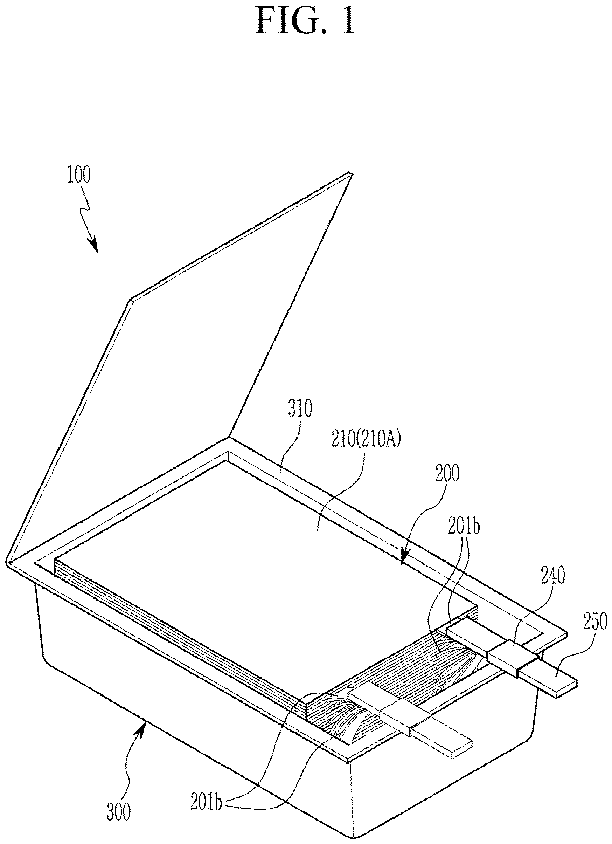

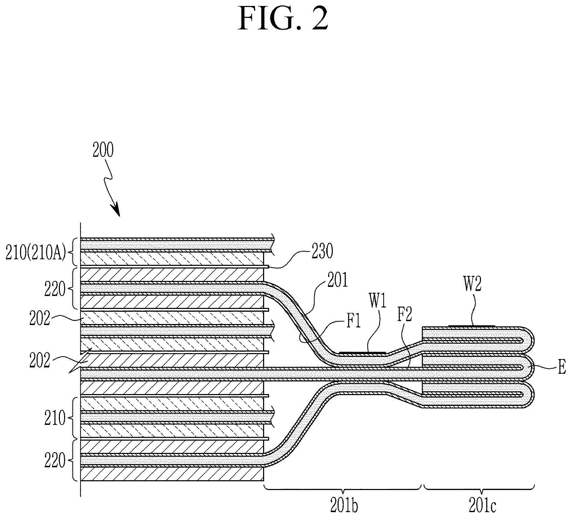

FIG. 1 is a perspective view showing a rechargeable battery in which an electrode plate according to some embodiments and an electrode assembly including the same may be installed. FIG. 2 is a cross-sectional view showing a plurality of electrode plates combined with each other.

Referring to FIG. 1 and FIG. 2, a rechargeable battery 100 may include an electrode assembly 200 and a case 300.

The electrode assembly 200 includes a plurality of electrode plates 210 and 220, and a separator 230. For example, the plurality of electrode plates 210 and 220 may include a first electrode plate 210 and a second electrode plate 220.

The electrode assembly 200 may have a structure in which the stack including the first electrode plate 210, the second electrode plate 220, and the separator 230 are repeatedly wound or stacked.

For example, the electrode assembly 200 may be a stacked type or configuration in which the electrodes 210 and 220 are arranged to be stacked in multiple layers. Alternatively, the electrode assembly 200 may be a jelly roll type or configuration that is repeatedly wound. In the present disclosure, the electrode assembly 200 is described as an example of a stacked type, but embodiments according to the present disclosure are not limited thereto.

Meanwhile, the manufacturing process of the stacked type electrode assembly 200 generally involves a first stacking process and a second stacking process.

In the first stacking process, a double-sided cathode (a full cathode) and a double-sided anode (a full anode) may be stacked. Here, the double-sided cathode (the full cathode) may be any of the plurality of first electrode plates 210 excluding the outermost first electrode plate 210A. Also the double-sided anode (the full anode) may be the second electrode plate 220.

In the secondary stacking process, a single-sided cathode (a half cathode) may be stacked on at least one side of the outermost sides based on the stacking direction. Here, the single-sided cathode may be the outermost first electrode plate 210A among the first electrode plates 210.

For convenience of explanation, FIG. 2 illustrates the electrode assembly 200 in which the single-sided cathode is stacked on the upper outermost portion of the electrode assembly 200, but it may also be possible to stack the single-sided cathode on the upper outermost portion and an outermost portion of both sides of the electrode assembly 200, respectively.

Here, the double-sided cathode and the double-sided anode are those in which the active material is applied to both sides of the substrate, and the single-sided cathode is one in which an electrode plate layer is positioned on only one side of the current collecting layer. Here, the electrode plate layer may be an active material layer. Further detailed descriptions of such double-sided cathodes, double-sided anodes, and single-sided cathodes will be omitted for brevity.

The separator 230 may be interposed between the first electrode plate 210 and the second electrode plate 220. The separator 230 prevents or reduces instances of a short circuit between the first electrode plate 210 and the second electrode plate 220, and enables the movement of lithium ions. To this end, the separator 230 may be relatively larger than the first electrode plate 210 and the second electrode plate 220.

The material of the separator 230 may be, for example, polyethylene, polypropylene, or a composite film of polyethylene and polypropylene, but embodiments according to the present disclosure are not limited thereto.

This separator 230 may be cut by a unit length and located between the first electrode plate 210 and the second electrode plate 220, or a single separator 230 made of a ribbon shape may be arranged in a zigzag shape between the first electrode plate 210 and the second electrode plate 220. Alternatively, the separator 230 may be installed to be wound in one direction between the first electrode plate 210 and the second electrode plate 220.

As such, the arrangement form of the separator 230 is not limited to a specific form, but in the present embodiments, the separator 230 is cut by the unit length and is limited and described as being located between the first electrode plate 210 and the second electrode plate 220.

The case 300 may accommodate the electrode assembly 200. The electrode assembly 200 described above is accommodated in the case 300 together with the electrolyte solution.

The case 300 as described above may be one of a pouch type, a cylindrical type, and a prismatic type. The pouch-type case 300 may be manufactured by bending plate-shaped exterior materials to face each other, pressing or drawing a first surface, and forming a recess on the first surface.

The electrode assembly 200 is accommodated in the recess. A sealing portion 310 is provided at the exterior circumference of the recess, and in the state that the electrode assembly 200 is accommodated in the recess, the sealing part 310 is sealed using a method such as thermal fusion.

Meanwhile, in the plurality of electrode plates, the above-described first electrode plate 210 may be a negative electrode, and the second electrode plate 220 may be a positive electrode, but the reverse may also be possible. The first electrode plate 210 and the second electrode plate 220 may be electrically connected to the outside of the rechargeable battery 100 through a strip terminal 250.

Additionally, an insulating tape 240 may be attached to the portion of the strip terminal 250 that is in contact with the case 300. The insulating tape 240 may prevent or reduce instances of the strip terminal 250 and the case 300 being electrically connected.

Below, the electrode assembly 200 according to some embodiments will be described in more detail with reference to the drawings.

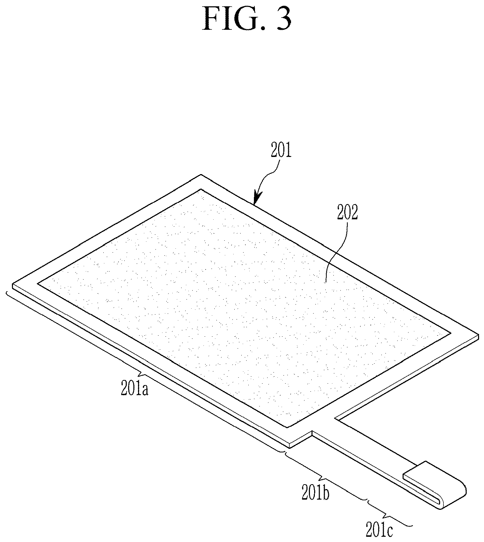

FIG. 2 is a cross-sectional view showing a plurality of combined electrode plates. FIG. 3 is a perspective view showing an electrode plate extracted from a rechargeable battery in FIG. 1.

Referring to FIG. 2 and FIG. 3, the electrode assembly 200 according to some embodiments includes the plurality of electrode plates 210 and 220 as described above, and the plurality of electrode plates 210 and 220 includes a current collecting layer 201 and an electrode plate layer 202 located on the portion of the current collecting layer 201. Here, the electrode plate layer 202 may be an electrode active material layer used in a rechargeable battery as would be understood by a person having ordinary skill in the art, so a detailed description thereof is omitted.

The current collecting layer 201 includes, with reference to the internal structure, a base layer E, and a first conductive layer F1 and a second conductive layer F2 positioned on the upper and lower surfaces of the base layer E, respectively.

The base layer E may include polyethylene terephthalate (PET), for example.

Also, the base layer E, for example, may include at least one of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polychloride vinyl, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, polynitride sulfur, polyphenylene, polypyrrole, polyaniline, polythiophene, polypyridine, cellulose, starch, protein, epoxy resin, phenol resin, a derivative of the above-described material, a crosslinked product of the above-described material, or a copolymer of the above-described material.

On the other hand, the base layer E may further include additives. The additive may include at least one of a metal material or an inorganic non-metal material.

For example, the metal material additive may be at least one of aluminum, aluminum alloy, copper, copper alloy, nickel, nickel alloy, titanium, titanium alloy, iron, iron alloy, silver, or silver alloy.

The inorganic non-metal material additive is at least one of, for example, carbon-based material, oxidation aluminum, silicon oxide, silicon nitride, carbonization silicon, nitride boron, silicic acid salt, and oxidation titanium, and at least one of, for example, glass materials, ceramic materials, or ceramic composite materials. The carbon-based material additive may be, for example, at least one of graphite, superconducting carbon, acetylene black, carbon black, Ketjen black, carbon dot, carbon nanotube, graphene, or carbon nanofiber.

Meanwhile, the additive may further include a carbon-based material coated by a metal material. For example, it may be at least one of graphite powder coated by nickel or carbon fiber coated by nickel.

Meanwhile, the first conductive layer F1 and the second conductive layer F2 may include aluminum. More specifically, the first conductive layer F1 and the second conductive layer F2 may include at least one of a metal material, a carbon-based conductive material, or a conductive polymer material.

Meanwhile, the aforementioned current collecting layer 201 may include a current collecting portion 201a, an extending portion 201b, and a curved portion 201c based on the external shape.

The electrode plate layer 202 may be applied to at least one side of the current collecting portion 201a. The current collecting portion 201a may have a rectangular plate shape, for example. For example, as shown in FIG. 3, the electrode plate layer 202 may be applied to the remaining portion except the edge region of the current collecting portion 201a. At this time, the edge region of the current collecting portion 201a may be an uncoated region where the electrode plate layer 202 is not applied.

Alternatively, the electrode plate layer 202 may be applied to the entire current collecting portion 201a. At this time, the current collecting portion 201a does not include an uncoated region, and an extending portion 201b, which will be described later, may be an uncoated region.

The extending portion 201b is connected to the current collecting portion 201a and extends outward from the current collecting portion 201a. The extending portion 201b may have a ribbon shape, for example.

The curved portion 201c is connected to the extending portion 201b, and a portion thereof is bent. For example, the curved portion 201c may be bent once. At this time, the curved portion 201c may be in the shape of the letter "U."

Accordingly, the curved portions 201c may be in contact with each other.

Meanwhile, as described above, the plurality of electrode plates 210 and 220 includes the first electrode plate 210 and the second electrode plate 220, and the current collecting layer 201 of each of the first electrode plate 210 and the second electrode plate 220 includes the extending portion 201b and the curved portion 201c.

The current collecting layer 201 included in each of the plurality of electrode plates 210 and 220 may be combined with the adjacent curved portions 201c in the upward and downward directions. In addition, the current collecting layers 201 included in each of the plurality of electrode plates 210 and 220 may be combined in the upward and downward directions between the adjacent extending portions 201b.

According to some embodiments, when the electrode assembly 200 is the stacked type, the first electrode plate 210 and the second electrode plate 220 may be stacked alternately with the separator 230 in between. There may be a plurality of first electrode plates 210 and second electrode plates 220.

Three first electrode plates 210 and three second electrode plates 220 are arranged are shown in the drawings, but the number is not limited to this, and the number of first electrode plates 210 and second electrode plates 220 may vary depending on the design of the rechargeable battery 100.

In the electrode assembly 200 according to some embodiments, the curved portions 201c of the first electrode plate 210 are positioned side by side in the upward and downward directions, and the curved portions 201c of the second electrode plate 220 are positioned side by side in the upward and downward directions. According to some embodiments, the curved portion 201c of the first electrode plate 210 may be spaced apart from the curved portion 201c of the second electrode plate 220 in the left and right directions.

Also, since the extending portions 201b connect the current collecting portion 201a and the curved portion 201c, the extending portions 201b of the first electrode plates 210 are positioned side by side with each other in an upward and downward direction, and the extending portions 201b of the second electrode plates 220 are positioned side by side with each other in an upward and downward direction.

Meanwhile, the curved portions 201c and the extending portions 201b as described above may be joined to each other by a welding method. For example, the plurality of curved portions 201c may be collected and joined by welding methods such as laser, resistance welding, and ultrasonic welding.

Here, when the curved portions 201c and the extending portions 201b are joined to each other by ultrasonic welding, the extending portion 201b of the current collecting layer 201 included in the outermost electrode plate 220 in the plurality of electrode plates 210 and 220 may have a first welding portion W1.

Also, in the plurality of electrode plates 210 and 220, there may be a second welding portion W2 in the curved portion 201c of the current collecting layer 201 included in the outermost electrode plate 220. Here, the shapes of the first welding portion W1 and the second welding portion W2 are not limited to a specific shape.

In FIG. 2, the first welding portion W1 is shown as being in the current collecting layer 201 included in the uppermost electrode plate 220 in the plurality of electrode plates 210 and 220, but it is not limited to this, and it may also be located in the current collecting layer 201 included in the lowest electrode plate 220 in the plurality of electrode plates 210 and 220.

Meanwhile, the length of the extending portion 201b may be relatively longer than the length of the curved portion 201c.

In the electrode assembly 200 described above, the curved portions 201c may be welded to each other and then the extending portions 201b may be welded to each other. At this time, if the length of the extending portion 201b is not relatively longer than the length of the curved portion 201c, it may be difficult to weld the extending portions 201b to each other. However, as described above, the length of the extending portion 201b is relatively longer than the length of the curved portion 201c, so the welding process of the extending portion 201b may be easily performed.

The manufacturing process of the electrode assembly 200 according to the above embodiments will be described in more detail with reference to accompanying drawings.

FIG. 4 to FIG. 6 are cross-sectional views sequentially showing a process of combining electrode plates. FIG. 4 is a cross-sectional view showing electrode plates arranged side by side in upward and downward directions.

Referring to FIG. 4, the first electrode plate 210 and the second electrode plate 220 are stacked. The first electrode plate 210 and the second electrode plate 220 may be sequentially stacked with the separator 230 in between.

FIG. 5 is a cross-sectional view showing a process of welding a curved portion of each current collecting layer by ultrasonic welding.

Referring to FIG. 5, the plurality of second electrode plates 220 may be welded with the curved portions 201c by a welding horn T used in ultrasonic welding. At this time, the first conductive layer F1 of one current collecting layer 201 and the first conductive layer F1 of the adjacent current collecting layer 201 may be electrically connected to each other.

FIG. 6 is a cross-sectional view showing a process of welding an extending portion of each current collecting layer by ultrasonic welding.

Referring to FIG. 6, the plurality of second electrode plates 220 may be welded with the extending portions 201b by a welding horn T used in ultrasonic welding. At this time, the second conductive layer F2 of one current collecting layer 201 and the first conductive layer F1 of the adjacent current collecting layer 201 may be electrically connected to each other.

Meanwhile, as shown in FIG. 7, it may also be possible to pressurize the extending portion 201b with a roller R before welding the extending portion 201b. Accordingly, since welding may be performed in a state where the extending portions 201b are stably adhered to each other, the extending portions 201b may be welded in parallel in the upward and downward directions.

In a rechargeable battery containing a resin metal composite substrate, there may be a problem in that it contacts only one side of the metal layer in welding the uncoated region of the electrode. To solve this problem, the manufacturing process may be increased by going through an electric connection process to electrically connect the metal layers.

However, returning to FIG. 2, the plurality of electrode plates 210 and 220 included in the electrode assembly 200 according to some embodiments each include the curved portion 201c and the extending portion 201b. Additionally, the curved portions 201c are connected to each other, and the extending portions 201b are also connected to each other. Accordingly, the first conductive layer F1 of one current collecting layer 201 is connected to the second conductive layer F2 of the adjacent current collecting layer 201, so that the entire electrode assembly 200 may be electrically connected.

In this way, the electrode assembly 200 according to some embodiments may not require performance of the electric connection process that may require an additional folding of foils and inserting them between the electrode plates one by one as in a prior art. Therefore, not only may the manufacturing time be shortened, but the manufacturing cost may also be reduced.

While aspects of some embodiments of the present disclosure have been described in connection with what is presently considered to be practical example embodiments, it should be understood that the invention is not limited to the disclosed embodiments, but, on the contrary, is intended to cover various modifications and equivalent arrangements included within the scope of the attached claims. Therefore, it would be understood by those skilled in the art that various modifications and other embodiments may be made from the present invention. Therefore, an actual technical protection scope of the present invention is to be determined by the technical idea of the appended claims, and their equivalents.

### Description of Some of the Reference Symbols

| | | | |
|---|---|---|---|
| 100: | rechargeable battery | | |
| 200: | electrode assembly | 201: | current collecting layer |
| 201a: | current collecting portion | 201b: | extending portion |
| 201c: | curved portion | 202: | electrode plate layer |
| 210: | first electrode plate | 220: | second electrode plate |
| 230: | separator | 300: | case |
| E: | base layer | F1: | first conductive layer |
| F2: | second conductive layer | | |

## Claims

1. An electrode plate (210) comprising:
a base layer (E);
a current collecting layer (201) including:
a first conductive layer (F1); and
a second conductive layer (F2) respectively on upper and lower surfaces of the base layer (E); and
an electrode plate layer (202) on at least one surface of the current collecting layer (201),
wherein the current collecting layer (201) includes:
a current collecting portion (201a) where the electrode plate layer (202) is on at least one surface;
an extending portion (201b) extending outward from the current collecting portion (201a); and
a curved portion (201c) connected to the extending portion (201b) and having a portion that is bent.

2. The electrode plate (210) of claim 1,
wherein the base layer (E) includes polyethylene terephthalate (PET); and/or.
wherein the base layer (E) includes at least one compound selected from the group comprising of polyamide, polyimide, polybutyleneterephthalate, polyethylene naphthalate, polycarbonate, polyethylene, polypropylene, polyethylene propylene, acrylonitrile-butadiene-styrene copolymer, polyvinyl alcohol, polystyrene, polychloride vinyl, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, polynitride sulfur, polyphenylene, polypyrrole, polyaniline, polythiophene, polypyridine, cellulose, starch, protein, epoxy resin, phenol resin, derivatives of above-mentioned materials, crosslinked products of the above-mentioned materials, or copolymers of the above-mentioned materials.

3. The electrode plate (210) of claim 1 or 2, wherein the base layer (E) further includes an additive, and the additive includes at least one of a metal material or an inorganic non-metal material.

4. The electrode plate (210) of any one of claims 1 to 3, wherein the first conductive layer (F1) and the second conductive layer (F2) include aluminum; and/or at least one of a metal material, a carbon-based conductive material, or a conductive polymer material.

5. The electrode plate (210) of any one of claims 1 to 4, wherein a length of the extending portion (201b) is relatively longer than a length of the curved portion (201c).

6. An electrode assembly (200) comprising:
a plurality of electrode plates (210, 220); and
a separator (230), wherein the plurality of electrode plates (210, 220) are stacked with the separator (230) in between,
wherein each of the plurality of electrode plates (210, 220) includes:
a base layer (E), and a current collecting layer (201) including a first conductive layer (F1) and a second conductive layer (F2) on upper and lower surfaces of the base layer (E), respectively; and
an electrode plate layer (202) on a portion of the current collecting layer (201), and
the current collecting layer (201) includes:
a current collecting portion (201a) where the electrode plate layer (202) is positioned on at least one surface;
an extending portion (201b) extending outward from the current collecting portion (201a); and
a curved portion (201c) that is connected to the extending portion (201b) and a portion of which is curved.

7. The electrode assembly (200) of claim 6, wherein:
the current collecting layer (201) included in each of the plurality of electrode plates (210, 220) is combined with adjacent curved portions (201c) in upward and downward directions, preferably wherein the current collecting layer (201) included in each of the plurality of electrode plates (210, 220) is combined with adjacent extending portions (201b) in upward and downward directions.

8. The electrode assembly (200) of claims 6 or 7, wherein:
in the plurality of electrode plates (210, 220), the extending portion (201b) of the current collecting layer (201) included in an outermost electrode plate (210, 220) has a first welding portion (W1), and
in the plurality of electrode plates (210, 220), the curved portion (201c) of the current collecting layer (201) included in the outermost electrode plate (210, 220) has a second welding portion (W2).

9. The electrode assembly (200) of any one of claims 6 to 8, wherein:
the plurality of electrode plates (210, 220) includes a first electrode plate (210) and a second electrode plate (220).

10. The electrode assembly (200) of any one of claims 6 to 9, wherein the base layer (E) includes polyethylene terephthalate (PET); and/or
wherein the base layer (E) includes at least one compound selected from the group comprising of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polychloride vinyl, polyvinylidene fluoride, polytetrafluoroethylene, polystyrene sulfonate sodium, polyacetylene, silicon rubber, polyoxymethylene, polyphenylene ether, polyphenylene sulfide, polyethylene glycol, polynitride sulfur, polyphenylene, polypyrrole, polyaniline, polythiophene, polypyridine, cellulose, starch, protein, epoxy resin, phenol resin, derivatives of above-mentioned materials, crosslinked products of the above-mentioned materials, or copolymers of the above-mentioned materials.

11. The electrode assembly (200) of any one of claims 6 to 10, wherein the base layer (E) further includes an additive, and the additive includes at least one of a metal material or an inorganic non-metal material.

12. The electrode assembly (200) of any one of claims 6 to 11, wherein the first conductive layer (F1) and the second conductive layer (F2) include aluminum; and/or wherein the first conductive layer (F1) and the second conductive layer (F2) include at least one of a metal material, a carbon-based conductive material, or a conductive polymer material.

13. The electrode assembly (200) of any one of claims 6 to 12, wherein the curved portion (201c) has a "U" shape.

14. The electrode assembly (200) of any one of claims 6 to 13, wherein a length of the extending portion (201b) is relatively longer than a length of the curved portion (201c).

15. A rechargeable battery (100) comprising:
an electrode assembly (200) of any one of claims 6 to 14; and
a case (300) accommodating the electrode assembly (200).
